# EUROPEAN PATENT SPECIFICATION

(11) **EP 3 389 267 B1**
(45) Date of publication and mention of the grant of the patent: **21.12.2022**
(21) Application number: 17165787.7
(22) Date of filing: 10.04.2017
(51) Int. Cl.: H04N 13/30, H04N 13/128, H04N 13/144, H04N 13/356, H04N 13/341, H04N 13/344

(54) **DISPLAY APPARATUS AND METHOD**
ANZEIGEVORRICHTUNG UND -VERFAHREN
APPAREIL ET PROCÉDÉ D'AFFICHAGE

(43) Date of publication of application: 17.10.2018
(73) Proprietor: Vestel Elektronik Sanayi ve Ticaret A.S., 45030 Manisa (TR)
(72) Inventor: EREN, Burak, 45030 Manisa (TR)
(74) Representative: Roberts, David

(56) References cited:
- EP-A1- 2 337 366
- EP-A1- 2 437 507
- EP-A2- 2 442 580
- US-A1- 2003 060 679
- US-A1- 2014 200 079
- US-A1- 2015 172 644

## Description

### Technical Field

The present disclosure relates to a display apparatus and method.

### Background

3D (three dimensional) displays, such as used in 3D televisions, 3D headsets, games consoles, cinemas, etc., are constructed and arranged such that a viewer can view their output in 3D. This gives a viewer a more immersive experience of the output content.

A number of different 3D display systems are known. These systems operate by producing two separate image signals, and causing a first of these image signals to be received by only a viewer's left eye, and causing a second of these image signals to be received by only the viewer's right eye.

EP2437507A1 discloses 3D shutter glasses which can individually acquire information according to 3D content that users view. In the 3D glasses, in addition to an image that is displayed on a 3D display device, a control screen for controlling the 3D display device is positioned on a predetermined area of the lower end portion of the 3D glasses unit.

EP2337366A1 discloses an image display device for displaying a 3D image. The image display device includes a user input unit configured to receive an item selection signal for some of one or more items included in a User Interface (UI) image, a control unit configured to generate a detailed image of a selection item selected by the item selection signal as a 3D image, and a display unit configured to display the detailed image.

US2015/172644A1 discloses a display device including a display panel. The display panel is configured to display left and right eye images. The signal processor is configured to generate and output left eye and right eye image signals. 30

US2003/060679A1 discloses a stereoscopic observation system having a stereoscopic mode for stereoscopic observation.

EP 2 442 580 A2 discloses a remote controller for controlling a display apparatus e.g. TV, and has a signal processor that selects one of two dimensional mode and three-dimensional mode based on display mode of display apparatus.

### Summary

According to a first aspect disclosed herein, there is provided display apparatus suitable for displaying an image to be viewed in 3D by a viewer, the display apparatus being a head-mounted display apparatus and comprising a first display region for a viewer's left eye; a second display region for a viewer's right eye; a controller configured to control operation of the display regions; and a 3D engine configured to generate image data suitable for viewing in 3D; wherein, for display of image content to be viewed in 3D, the controller is configured to cause the first display region to display a left side image of the image content and to cause the second display region to display a right side image of the image content; and wherein the controller is configured such that when an on-screen display image is to be displayed, image content and the on-screen display image are caused to be displayed by only one of the display regions and the 3D engine continues to operate such that the 3D engine continues to generate the 3D image data when the on-screen display image is displayed by the display apparatus.

In an example the image content comprises motion picture content.

In an example the on-screen display comprises a 2D on-screen display.

In an example the on-screen display comprises a 3D on-screen display.

In an example the controller is configured to cause image content and an on-screen display image to be displayed by only one of the display regions in response to detecting an on-screen display image being displayed or to be displayed to a viewer.

In an example the controller is configured to cause image content and an on-screen display image to be displayed by only one of the display regions in response to detecting interaction by a viewer with an on-screen display image being displayed by the display apparatus.

In an example the controller is configured to blank the other display region when image content and an on-screen display image are to be displayed by only one of the display regions.

In an example the controller is configured to blank the other display region by switching off the other display region or causing the other display region to display a blank image.

In an example the blank image may be black or some other dim or dull image.

In an example the controller is configured to delay blanking the other display region for a predetermined time after receiving a signal requesting display of an on-screen display image.

In an example the controller is configured to receive information of which of the viewer's left eye and right eye is their dominant eye, and the controller is configured to cause image content and an on-screen display image to be displayed by the display region associated with the dominant eye.

In an example the on-screen display comprises a menu or web-page.

In an example the on-screen display comprises a picture-in-picture display.

In an example the first and second display areas comprise separate displays.

In an example the first and second display areas are comprised in a unitary display screen.

According to a second aspect there is provided a method for controlling a display apparatus for generating an image for viewing in 3D, the display apparatus being a head-mounted display apparatus and comprising a first display region for a viewer's left eye and a second display region for a viewer's right eye and a 3D engine configured to generate image data suitable for viewing in 3D, the method comprising: controlling operation of the display regions such that for display of image content to be viewed in 3D, the first display region displays a left side image of the image content the second display region displays a right side image of the image content; and when an on screen display image is to be displayed, causing image content and an on-screen display image to be displayed by only one of the display regions while the 3D engine continues to operate such that the 3D engine continues to generate the 3D image data when the on-screen display image is displayed by the display apparatus.

In an example, the method comprises causing image content and an on-screen display image to be displayed by only one of the display regions in response to detecting an on-screen display image being displayed or to be displayed to a viewer.

In an example, the method comprises causing image content and an on-screen display image to be displayed by only one of the display regions in response to detecting interaction by a viewer with an on-screen display image being displayed by the display apparatus.

In an example, the method comprises blanking the other display region when image content and an on-screen display image are to be displayed by only one of the display regions.

In an example, the method comprises blanking the other display region by switching off the other display region or causing the other display region to display a blank image.

In an example, the method comprises delaying blanking the other display region for a predetermined time after receiving a signal requesting display of an on-screen display image

In an example, the method comprises receiving information of which of the viewer's left eye and right eye is their dominant eye, and causing image content and an on-screen display image to be displayed by the display region associated with the dominant eye.

### Brief Description of the Drawings

To assist understanding of the present disclosure and to show how embodiments may be put into effect, reference is made by way of example to the accompanying drawings in which:
Figure 1 shows schematically an example of a 3D display apparatus;
Figure 2 shows schematically an example of image output from a 3D display;
Figure 3A shows schematically an example of 3D display apparatus operating according to a first mode;
Figure 3B shows schematically an example of 3D display apparatus operating according to a second mode; and
Figure 4 shows schematically an example of some components of a 3D display apparatus.

### Detailed Description

The present disclosure has applicability to 3D display systems, including in particular 3D headsets or other 3D head-mounted displays which have separate display screens or other separate display regions for the user's left and right eyes respectively.

When viewing for example a television programme or movie, or playing a computer game, a user often wants or needs to bring up a further image, such as an on-screen display (OSD). The OSD enables user interaction including, for example, browsing through a menu, changing settings, checking an electronic program guide (EPG) or other guides provided over the Internet such as Hbb TV (Hybrid Broadcast Broadband TV), browsing through the Internet or World Wide Web, etc. The OSD may also comprise an additional video or programme, for example a picture-in-picture display. The OSD can be displayed on-screen at the same time as the main image that the viewer is watching (e.g. motion picture of a television programme). Thus the OSD may overlay the played content or be placed to one side of the played content. This allows a user to browse through or view the OSD whilst the programme is still being played in the background.

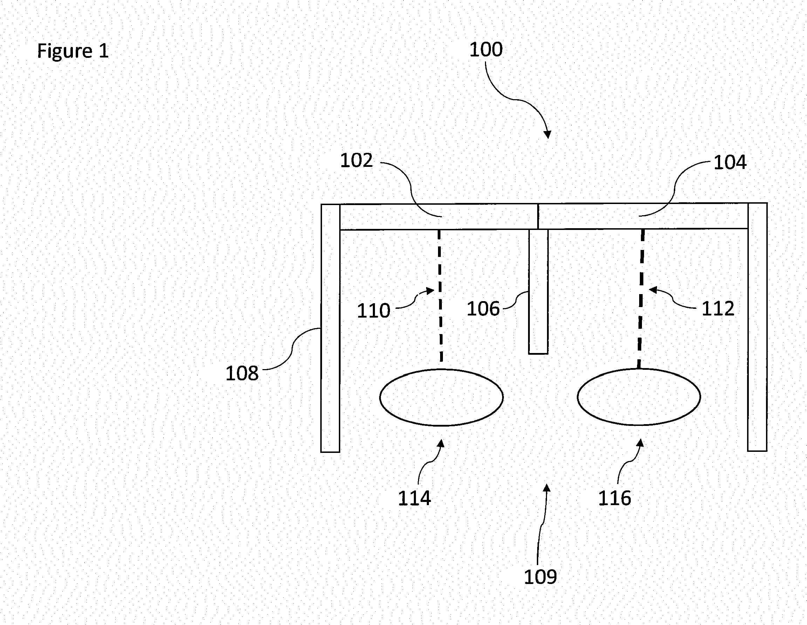

Figure 1 illustrates schematically in plan view an example of a display apparatus 100. The display apparatus 100 comprises a first display region 102 and a second display region 104. In this example, the first and second display regions 102, 104 are discrete display screens. The display apparatus also comprises a casing 108. A strap or headband or the like may also be provided for enabling the display apparatus 100 to be attached to a viewer's head, with the display apparatus 100 being of a suitable size and weight to be worn by a user.

The viewer is schematically shown at 109. The viewer's left eye 114 is schematically shown at 114, and the viewer's right eye is schematically shown at 116. A barrier 106 separates the two displays, and ensures that the viewer's left eye 114 receives only images 110 from first or left display region 102, and the viewer's right eye 116 receives only images 112 from the second or right display region 104.

In the example of Figure 1 the left and right images 110, 112 comprise image content to be viewed in 3D by the viewer. The left image content 110 differs slightly from the right image content 112. For example, the left images 110 are of the same image scene as the right images 112, but from a slightly different angle. When the viewer's brain combines the two slightly different images 110, 112 the image as a whole is perceived by the user in 3D.

The display regions 102, 104 may be separate or discrete display screens. For example the display regions 102, 104 may be separate display screens of an integrated 3D headset.

Alternatively the display regions 102, 104 may be part of a same, single display screen, for example a screen of a mobile phone, such as a "smart phone". The screen in that case is notionally divided into separate display regions 102, 104. In such an example the display (e.g. the phone as a whole) may be placed in to a separate apparatus comprising casing 108, barrier 106, and strap or headband. Of course in such an example the unitary display screen is capable of controlling the display regions 102, 104 separately so as to generate image content suitable for viewing in 3D.

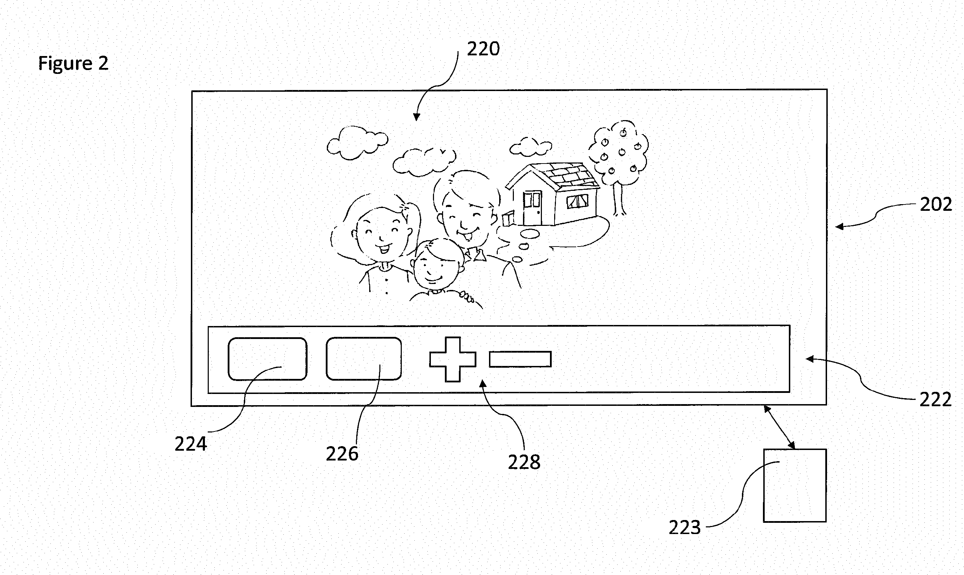

Figure 2 shows a displayed image or images 202 as may be viewed by a viewer. 3D played content is shown at 220. This may include for example a TV programme or movie, a computer game, etc. As shown in Figure 2 a viewer has brought or called up an OSD 222, for example by pressing a button on a remote control. By way of example only the OSD in this instance comprises a guide 224, Internet browser 226, and volume control 228. The OSD item may be considered a separate image from the scene content 220. The OSD item may be considered to overlay or at least partially overlay the scene content 220.

The OSD may be called by use of a remote control apparatus shown schematically at 223. The remote control apparatus may comprise a traditional style of remote control such as one used to control a TV, or a games controller such as a joystick or joypad, or indeed any other type of controller. In one example the remote control may be part of the display apparatus 100, for example one or more buttons on the casing 108.

The OSD 222 may be displayed in such a manner so as to be viewed in 3D, in addition to the displayed 3D content 220. This may cause a problem in that different depths may be used for the OSD 222 and the content 220. This may confuse the viewer's brain, which cannot easily adapt to the different depths. This may distract the viewer or give the user an unpleasent viewing experience.

Alternatively the OSD may be displayed in such a manner so as to be viewed in 2D. This can also be distracting or uncomfortable to the viewer when displayed in conjunction with the 3D scene 220.

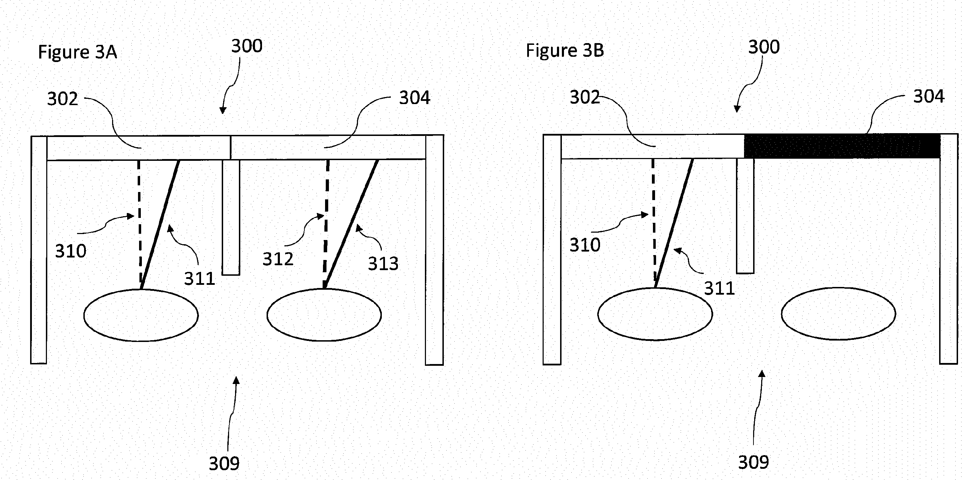

Figure 3A shows an example of a display apparatus 300. Features in common with or equivalent to display apparatus 100 in Figure 1 are labelled with an equivalent reference number, except in 300 series rather than 100. In Figure 3A the first display region 302 is displaying first image content 310, and the second display region 304 is displaying second image content 312, the first and second image content 310, 312 being configured to enable the image or scene to be viewed in 3D by the viewer. In the example of Figure 3A the viewer 309 has called-up an OSD. Accordingly, first display region 302 additionally displays first OSD image content 311, and second display region 304 displays second OSD image content 313. The display apparatus may be configured to display the OSD image content in 2D or 3D, with the first and second OSD image content 311, 313 being the same or different respectively. As discussed above, it may be uncomfortable or distracting to the viewer 309 to view an OSD in conjunction with the main 3D image content, whether the OSD is 2D or 3D.

Accordingly, as shown in Figure 3B, when 3D scene image content is displayed in conjunction with an OSD, the display apparatus 300 is configured to cause the image content and OSD image to be displayed by only one of the display regions 302, 304. This is shown for example in Figure 3B where the second display region 304 has been caused to display neither of the 3D scene image content or the OSD image content. In one example this is achieved by switching off that display region. In another example this is achieved by blanking that display region. In some examples the blanking of the display is achieved by displaying a blank image, for example a plain black or a plain dull or dim image.

This causes the scene image content (e.g. motion picture) and the OSD to be perceived in 2D by the viewer 309. This alleviates distraction and/or discomfort caused by depth differences between 3D scene image content and a 3D OSD, or indeed between 3D scene image content and a 2D OSD.

Figure 3B shows this effect where the second or right display region 304 is switched off or blanked. Of course, this may also be achieved by switching off or blanking the first or left display region 302 instead.

Accordingly the display apparatus 300 may be considered to have two modes. In a first mode both the first image region 302 and second image region 304 display image content to be viewed in 3D. In a second mode only one of the first display region 302 and second display region 304 displays content to be viewed by the viewer 309 (e.g. motion picture of a film or programme being watched and an OSD). In the second mode the other of the first and second display regions is switched off or blanked, as described above.

In one example, the display apparatus switches from the first mode to the second mode in response to determining an on-screen display image being displayed or to be displayed to a viewer. The trigger for switching from the first mode to the second mode may be for example receipt of a control signal calling up the OSD. For example this control signal may be received from a remote control or controller on the display apparatus casing. In some examples a pre-determined delay is configured between the time of receiving the control signal calling the OSD and the switching from the first mode to the second mode. The pre-determined delay is arranged to match a period of time it takes for the OSD to be displayed after receipt of the control signal calling the OSD. This minimises the amount of time that the intended 3D content is displayed in the 2D mode, and also minimises distraction to the viewer.

In another example the trigger for switching from the first mode to the second mode is the viewer interacting with the OSD. That is in the first mode both the OSD and main 3D image content may (initially) be displayed to the user through first and second display regions 302, 304 (as shown in Figure 3A). Only once the viewer actually starts interacting with the OSD does the viewing apparatus switch from the first mode to the second mode. Interaction may be by means of a controller such as a joystick, an air mouse, a remote control or indeed any other controller that allows a user to interact with the OSD, for example moving a cursor to make a menu selection.

Of course the display apparatus can also switch from the second mode back to the first mode. In one example this may be in response to the viewer closing down the OSD. In one example this may be in response to the viewer not interacting with the OSD for a threshold period of time.

In some examples the display apparatus 300 is programmed with information of a user's dominant eye. The dominant eye information may be provided by the viewer or following interaction by the viewer, for example by taking the viewer through a dominant eye configuration test or procedure. Once information of the viewer's dominant eye is obtained then the display apparatus is configured to blank (or switch off) the display region that is not associated with the viewer's dominant eye when in the second mode. That is, in the second mode the viewer's dominant eye receives the scene image content and the OSD image content.

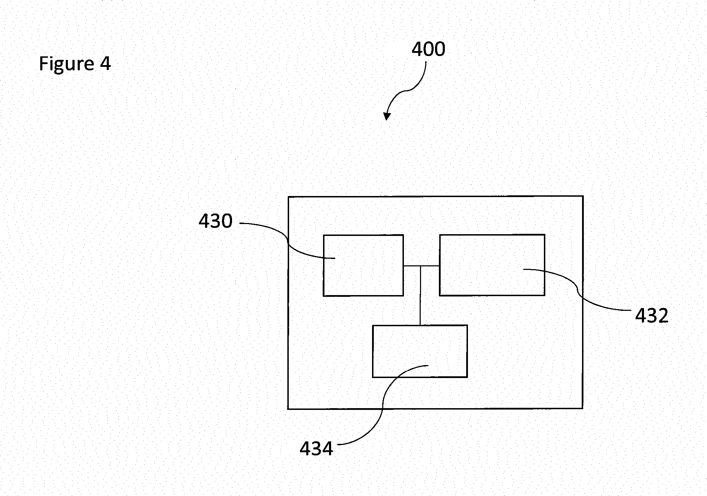

Figure 4 schematically shows some features of display apparatus 400 (which may be equivalent to display apparatus 100, 300 described above). The display apparatus 400 comprises a memory 430 and a processor or controller 432. Also provided is a 3D engine 434, configured to generate image data suitable for viewing in 3D. The controller 432 controls the display regions 302, 304 of the display apparatus, as previously described. In some examples, the 3D engine 434 generates image data suitable for viewing in 3D, regardless of whether the display apparatus 400 is in the first mode or the second mode. That is, it is the control of the display regions 302, 304 which determines whether the images are viewed in 3D, rather than output from the 3D engine 434. Thus the 3D engine does not have to go through a process of switching between 3D and non-3D modes, which can otherwise cause processing delays which can be disruptive for the user.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Display apparatus (300, 400) suitable for displaying an image to be viewed in 3D by a viewer, the display apparatus (300, 400) being a head-mounted display apparatus and comprising:
a first display region (302) for a viewer's left eye;
a second display region (304) for a viewer's right eye;
a controller configured to control operation of the display regions; and
a 3D engine (434) configured to generate 3D image data suitable for viewing in 3D;
wherein, for display of image content (220) to be viewed in 3D, the controller is configured to cause the first display region (302) to display a left side image of the image content (220) and to cause the second display region (304) to display a right side image of the image content (220); and
wherein the controller is configured such that when an on-screen display image (222) is to be displayed, image content (220) and the on-screen display image (222) are caused to be displayed by only one of the display regions and the 3D engine (434) continues to operate such that the 3D engine (434) continues to generate the 3D image data when the on-screen display image (222) is displayed by the display apparatus (300, 400).

2. Display apparatus (300) according to claim 1, wherein the controller is configured to cause image content and an on-screen display image to be displayed by only one of the display regions in response to detecting an on-screen display image (222) being displayed or to be displayed to a viewer.

3. Display apparatus (300, 400) according to claim 1 or claim 2, wherein the controller is configured to cause image content (220) and an on-screen display image (222) to be displayed by only one of the display regions (302, 304) in response to detecting interaction by a viewer with an on-screen display image (222) being displayed by the display apparatus.

4. Display apparatus (300, 400) according to any of claims 1 to 3, wherein the controller is configured to blank the other display region (302, 304) when image content (220) and an on-screen display image (222) are to be displayed by only one of the display regions (302, 304).

5. Display apparatus (300, 400) according to claim 4, wherein the controller is configured to blank the other display region (302, 304) by switching off the other display region or causing the other display region to display a blank image.

6. Display apparatus (300, 400) according to claim 4 or claim 5, the controller being configured to delay blanking the other display region (302, 304) for a predetermined time after receiving a signal requesting display of an on-screen display image (222).

7. Display apparatus (300, 400) according to any of claims 1 to 6, the controller being configured to receive information of which of the viewer's left eye and right eye is their dominant eye, and wherein the controller is configured to cause image content (220) and an on-screen display image (222) to be displayed by the display region associated with the dominant eye.

8. A method for controlling a display apparatus (300, 400) for generating an image for viewing in 3D, the display apparatus (300, 400) being a head-mounted display apparatus and comprising a first display region (302) for a viewer's left eye and a second display region (304) for a viewer's right eye and a 3D engine (434) configured to generate 3D image data suitable for viewing in 3D, the method comprising:
controlling operation of the display regions (302, 304) such that for display of image content to be viewed in 3D, the first display region (302) displays a left side image of the image content (220) and the second display region displays a right side image of the image content (220); and
when an on screen display image (222) is to be displayed, causing image content (220) and an on-screen display image (222) to be displayed by only one of the display regions while the 3D engine (434) continues to operate such that the 3D engine (434) continues to generate the 3D image data when the on-screen display image (222) is displayed by the display apparatus (300, 400).

9. A method according to claim 8, comprising causing image content (220) and an on-screen display image (222) to be displayed by only one of the display regions in response to detecting an on-screen display image being displayed or to be displayed to a viewer.

10. A method according to claim 8 or claim 9, comprising causing image content (220) and an on-screen display image (222) to be displayed by only one of the display regions (302, 304) in response to detecting interaction by a viewer with an on-screen display image (222) being displayed by the display apparatus.

11. A method according to any of claims 8 to 10, comprising blanking the other display region (302, 304) when image content (220) and an on-screen display image (222) are to be displayed by only one of the display regions (302, 304).

12. A method according to claim 11, comprising blanking the other display region (302, 304) by switching off the other display region (302, 304) or causing the other display region (302, 304) to display a blank image.

13. A method according to claim 11 or 12, comprising delaying blanking the other display region (302, 304) for a predetermined time after receiving a signal requesting display of an on-screen display image (222).

14. A method according to any of claims 8 to 13, comprising receiving information of which of the viewer's left eye and right eye is their dominant eye, and causing image content and an on-screen display image to be displayed by the display region associated with the dominant eye.

## Patentansprüche

1. Anzeigevorrichtung (300, 400), geeignet zum Anzeigen eines von einem Betrachter in 3D zu betrachtenden Bildes, wobei die Anzeigevorrichtung (300, 400) eine am Kopf montierte Anzeigevorrichtung ist und aufweist:
einen ersten Anzeigebereich (302) für ein linkes Betrachterauge;
einen zweiten Anzeigebereich (304) für ein rechtes Betrachterauge;
eine Steuerung, die konfiguriert ist, um den Betrieb der Anzeigebereiche zu steuern; und
eine 3D-Maschine (434), die konfiguriert ist, um 3D-Bilddaten zu erzeugen, die zum Betrachten in 3D geeignet sind;
wobei für die Anzeige eines in 3D zu betrachtenden Bildinhalts (220) die Steuerung konfiguriert ist, um den ersten Anzeigebereich (302) zu veranlassen, ein linksseitiges Bild des Bildinhalts (220) anzuzeigen, und den zweiten Anzeigebereich (304) zu veranlassen, ein rechtsseitiges Bild des Bildinhalts (220) anzuzeigen; und wobei die Steuerung so konfiguriert ist, dass, wenn ein Bildschirmanzeigebild (222) angezeigt werden soll, der Bildinhalt (220) und das Bildschirmanzeigebild (222) veranlasst werden, von nur einem der Anzeigebereiche angezeigt zu werden, und
die 3D-Maschine (434) weiterhin so arbeitet, dass die 3D-Maschine (434) weiterhin die 3D-Bilddaten erzeugt, wenn das Bildschirmanzeigebild (222) durch die Anzeigevorrichtung (300, 400) angezeigt wird.

2. Anzeigevorrichtung (300) nach Anspruch 1, wobei die Steuerung konfiguriert ist, um als Reaktion auf ein Erfassen eines einem Betrachter angezeigten oder anzuzeigenden Bildschirmanzeigebildes (222) zu veranlassen, dass der Bildinhalt und ein Bildschirmanzeigebild von nur einem der Anzeigebereiche angezeigt werden.

3. Anzeigevorrichtung (300, 400) nach Anspruch 1 oder Anspruch 2, wobei die Steuerung konfiguriert ist, um als Reaktion auf ein Erfassen einer Interaktion von einem Betrachter mit einem durch die Anzeigevorrichtung angezeigten Bildschirmanzeigebild (222) zu veranlassen, dass der Bildinhalt (220) und ein Bildschirmanzeigebild (222) von nur einem der Anzeigebereiche (302, 304) angezeigt werden.

4. Anzeigevorrichtung (300, 400) nach einem der Ansprüche 1 bis 3, wobei die Steuerung konfiguriert ist, um den anderen Anzeigebereich (302, 304) zu löschen, wenn der Bildinhalt (220) und ein Bildschirmanzeigebild (222) von nur einem der Anzeigebereiche (302, 304) angezeigt werden sollen.

5. Anzeigevorrichtung (300, 400) nach Anspruch 4, wobei die Steuerung konfiguriert ist, um den anderen Anzeigebereich (302, 304) durch Ausschalten des anderen Anzeigebereichs zu löschen oder den anderen Anzeigebereich zu veranlassen, ein leeres Bild anzuzeigen.

6. Anzeigevorrichtung (300, 400) nach Anspruch 4 oder Anspruch 5, wobei die Steuerung konfiguriert ist, um das Löschen des anderen Anzeigebereichs (302, 304) für eine vorbestimmte Zeit nach Empfangen eines Signals, das die Anzeige eines Bildschirmanzeigebildes (222) anfordert, zu verzögern.

7. Anzeigevorrichtung (300, 400) nach einem der Ansprüche 1 bis 6, wobei die Steuerung konfiguriert ist, um Informationen darüber zu empfangen, welches des linken Auges und des rechten Auges des Betrachters ihr dominantes Auge ist, und wobei die Steuerung konfiguriert ist, um zu veranlassen, dass der Bildinhalt (220) und ein Bildschirmanzeigebild (222) durch den dem dominanten Auge zugeordneten Anzeigebereich angezeigt werden.

8. Verfahren zum Steuern einer Anzeigevorrichtung (300, 400) zum Erzeugen eines Bildes zum Betrachten in 3D, wobei die Anzeigevorrichtung (300, 400) eine am Kopf montierte Anzeigevorrichtung ist und einen ersten Anzeigebereich (302) für ein linkes Betrachterauge und einen zweiten Anzeigebereich (304) für ein rechtes Betrachterauge und einen 3D-Maschine (434), die konfiguriert ist, um 3D-Bilddaten zu erzeugen, die zum Betrachten in 3D geeignet sind, aufweist, wobei das Verfahren aufweist:
Steuern des Betriebs der Anzeigebereiche (302, 304) derart, dass für die Anzeige eines in 3D zu betrachtenden Bildinhalts der erste Anzeigebereich (302) ein linksseitiges Bild des Bildinhalts (220) anzeigt und der zweite Anzeigebereich ein rechtsseitiges Bild des Bildinhalts (220) anzeigt; und
wenn ein Bildschirmanzeigebild (222) angezeigt werden soll, Veranlassen, dass der Bildinhalt (220) und ein Bildschirmanzeigebild (222) von nur einem der Anzeigebereiche angezeigt werden, während die 3D-Maschine (434) weiterhin so arbeitet, dass die 3D-Maschine (434) weiterhin die 3D-Bilddaten erzeugt, wenn das Bildschirmanzeigebild (222) durch die Anzeigevorrichtung (300, 400) angezeigt wird.

9. Verfahren nach Anspruch 8, aufweisend ein Veranlassen, dass der Bildinhalt (220) und ein Bildschirmanzeigebild (222) von nur einem der Anzeigebereiche angezeigt werden, als Reaktion auf ein Erfassen eines einem Betrachter angezeigten oder anzuzeigenden Bildschirmanzeigebildes.

10. Verfahren nach Anspruch 8 oder Anspruch 9, aufweisend ein Veranlassen, dass der Bildinhalt (220) und ein Bildschirmanzeigebild (222) von nur einem der Anzeigebereiche (302, 304) angezeigt werden, als Reaktion auf ein Erfassen einer Interaktion von einem Betrachter mit einem durch die Anzeigevorrichtung angezeigten Bildschirmanzeigebild (222).

11. Verfahren nach einem der Ansprüche 8 bis 10, aufweisend ein Löschen des anderen Anzeigebereichs (302, 304), wenn der Bildinhalt (220) und ein Bildschirmanzeigebild (222) von nur einem der Anzeigebereiche (302, 304) angezeigt werden sollen.

12. Verfahren nach Anspruch 11, aufweisend ein Löschen des anderen Anzeigebereichs (302, 304) durch Ausschalten des anderen Anzeigebereichs (302, 304) oder ein Veranlassen, dass der andere Anzeigebereich (302, 304) ein leeres Bild anzeigt.

13. Verfahren nach Anspruch 11 oder 12, aufweisend ein Verzögern des Löschens des anderen Anzeigebereichs (302, 304) für eine vorbestimmte Zeit nach Empfangen eines Signals, das die Anzeige eines Bildschirmanzeigebildes (222) anfordert.

14. Verfahren nach einem der Ansprüche 8 bis 13, aufweisend ein Empfangen von Informationen darüber, welches des linken Auges und des rechten Auges des Betrachters ihr dominantes Auge ist, und ein Veranlassen, dass der Bildinhalt und ein Bildschirmanzeigebild durch den dem dominanten Auge zugeordneten Anzeigebereich angezeigt werden.

## Revendications

1. Appareil d'affichage (300, 400) approprié à afficher une image à visualiser en 3D par un observateur, l'appareil d'affichage (300, 400) étant un visiocasque et comprenant :
une première région d'affichage (302) pour l'œil gauche d'un observateur ;
une deuxième région d'affichage (304) pour l'œil droit d'un observateur ;
un contrôleur configuré pour commander le fonctionnement des régions d'affichage ; et
un moteur 3D (434) configuré pour générer des données d'image en 3D appropriées à une visualisation en 3D,
dans lequel, pour l'affichage d'un contenu d'image (220) à visualiser en 3D, le contrôleur est configuré pour faire en sorte que la première région d'affichage (302) affiche une image du côté gauche du contenu d'image (220), et pour faire en sorte que la deuxième région d'affichage (304) affiche une image du côté droit du contenu d'image (220), et
dans lequel le contrôleur est configuré de telle sorte que, lorsqu'une image d'affichage à l'écran (OSD) (222) doit être affichée, le contenu d'image (220) et l'image d'affichage à l'écran (222) sont amenés à être affichés par une seule des régions d'affichage, et le moteur 3D (434) continue de fonctionner de telle sorte que le moteur 3D (434) continue de générer les données d'image en 3D lorsque l'image d'affichage à l'écran (222) est affichée par l'appareil d'affichage (300, 400).

2. Appareil d'affichage (300) selon la revendication 1, dans lequel le contrôleur est configuré pour faire en sorte que le contenu d'image et une image d'affichage à l'écran soient affichés par une seule des régions d'affichage en réponse à la détection d'une image d'affichage à l'écran (222) qui est affichée ou doit être affichée à l'intention d'un observateur.

3. Appareil d'affichage (300, 400) selon la revendication 1 ou 2, dans lequel le contrôleur est configuré pour faire en sorte que le contenu d'image (220) et une image d'affichage à l'écran (222) soient affichés par une seule des régions d'affichage (302, 304) en réponse à la détection d'une interaction par un observateur avec une image d'affichage à l'écran (222) qui est affichée par l'appareil d'affichage.

4. Appareil d'affichage (300, 400) selon l'une quelconque des revendications 1 à 3, dans lequel le contrôleur est configuré pour effacer l'autre région d'affichage (302, 304) lorsque le contenu d'image (220) et une image d'affichage à l'écran (222) doivent être affichés par une seule des régions d'affichage (302, 304).

5. Appareil d'affichage (300, 400) selon la revendication 4, dans lequel le contrôleur est configuré pour effacer l'autre région d'affichage (302, 304) en désactivant l'autre région d'affichage ou en faisant en sorte que l'autre région d'affichage affiche une image vierge.

6. Appareil d'affichage (300, 400) selon la revendication 4 ou 5, le contrôleur étant configuré pour retarder l'effacement de l'autre région d'affichage (302, 304) pendant un temps prédéterminé après la réception d'un signal demandant l'affichage d'une image d'affichage à l'écran (222).

7. Appareil d'affichage (300, 400) selon l'une quelconque des revendications 1 à 6, le contrôleur étant configuré pour recevoir des informations sur lequel de l'œil gauche et l'œil droit de l'observateur est son œil dominant, et dans lequel le contrôleur est configuré pour faire en sorte que le contenu d'image (220) et une image d'affichage à l'écran (222) soient affichés par la région d'affichage associée à l'œil dominant.

8. Procédé de commande d'un appareil d'affichage (300, 400) destiné à générer une image à visualiser en 3D, l'appareil d'affichage (300, 400) étant un visiocasque et comprenant une première région d'affichage (302) pour l'œil gauche d'un observateur, une deuxième région d'affichage (304) pour l'œil droit d'un observateur, et un moteur 3D (434) configuré pour générer des données d'image en 3D appropriées à une visualisation en 3D, le procédé consistant à :
commander le fonctionnement des régions d'affichage (302, 304) de telle sorte que, pour l'affichage d'un contenu d'image à visualiser en 3D, la première région d'affichage (302) affiche une image du côté gauche du contenu d'image (220) et la deuxième région d'affichage affiche une image du côté droit du contenu d'image (220) ; et
lorsqu'une image d'affichage à l'écran (OSD) (222) doit être affichée, faire en sorte que le contenu d'image (220) et une image d'affichage à l'écran (222) soient affichés par une seule des régions d'affichage tandis que le moteur 3D (434) continue de fonctionner de telle sorte que le moteur 3D (434) continue de générer les données d'image en 3D lorsque l'image d'affichage à l'écran (222) est affichée par l'appareil d'affichage (300, 400).

9. Procédé selon la revendication 8, consistant à faire en sorte que le contenu d'image (220) et une image d'affichage à l'écran (222) soient affichés par une seule des régions d'affichage en réponse à la détection d'une image d'affichage à l'écran qui est affichée ou doit être affichée à l'intention d'un observateur.

10. Procédé selon la revendication 8 ou 9, consistant à faire en sorte que le contenu d'image (220) et une image d'affichage à l'écran (222) soient affichés par une seule des régions d'affichage (302, 304) en réponse à la détection d'une interaction par un observateur avec une image d'affichage à l'écran (222) qui est affichée par l'appareil d'affichage.

11. Procédé selon l'une quelconque des revendications 8 à 10, consistant à effacer l'autre région d'affichage (302, 304) lorsque le contenu d'image (220) et une image d'affichage à l'écran (222) doivent être affichés par une seule des régions d'affichage (302, 304).

12. Procédé selon la revendication 11, consistant à effacer l'autre région d'affichage (302, 304) en désactivant l'autre région d'affichage (302, 304) ou en faisant en sorte que l'autre région d'affichage (302, 304) affiche une image vierge.

13. Procédé selon la revendication 11 ou 12, consistant à retarder l'effacement de l'autre région d'affichage (302, 304) pendant un temps prédéterminé après la réception d'un signal demandant l'affichage d'une image d'affichage à l'écran (222).

14. Procédé selon l'une quelconque des revendications 8 à 13, consistant à recevoir des informations sur lequel de l'œil gauche et l'œil droit de l'observateur est son œil dominant, et à faire en sorte que le contenu d'image et une image d'affichage à l'écran soient affichés par la région d'affichage associée à l'œil dominant.
